# EUROPÄISCHE PATENTSCHRIFT

(11) **EP 1 768 225 B1**
(45) Veröffentlichungstag und Bekanntmachung des Hinweises auf die Patenterteilung: **02.07.2014**
(21) Anmeldenummer: 05020733.1
(22) Anmeldetag: 23.09.2005
(51) Int. Cl.: H02J 7/00

(54) **Akkupack, insbesondere für die Verwendung bei Elektrohandwerkzeuggeräten, Ladegerät und System aus Akkupack und Ladegerät**
Battery pack, in particular for use with hand-held electric tools, charger device and system of battery pack and charger device
bloc-batterie, en particulier pour l'utilisation avec outils électriques à main, dispositif chargeur et système de bloc-batterie et dispositif chargeur

(43) Veröffentlichungstag der Anmeldung: 28.03.2007
(73) Patentinhaber: Metabowerke GmbH, 72622 Nürtingen (DE); FRIWO Gerätebau GmbH, 48346 Ostbevern (DE)
(72) Erfinder: Gräber, Jochen, 73266 Bissingen (DE); Breuch, Georg, 48268 Greven (DE)
(74) Vertreter: Raunecker, Klaus Peter

(56) Entgegenhaltungen:
- EP-A- 0 661 769
- EP-A- 0 800 253

## Beschreibung

Die Erfindung betrifft einen Akkupack, insbesondere für die Verwendung bei Elektrohandwerkzeuggeräten, mit einem ersten und einem zweiten Ladeanschluss und mit einem dritten Steueranschluss, die alle drei zur Herstellung einer Ladeverbindung an ein Ladegerät anschließbar sind, und mit einem über eine Schnittstellenschaltung ansprechbaren Rechenmittel, wobei die Schnittstellenschaltung den dritten Steueranschluss verwendet.

Ursprünglich wurden analoge Akkupacks verwendet, die einen Temperaturfühler in Form eines NTC-Widerstands aufwiesen. Der NTC-Widerstand war über den dritten Steueranschluss des Akkupacks durch das Ladegerät ansprechbar, und es konnte auf diese Weise eine Erwärmung des Akkupacks im Zuge des Ladevorgangs erkannt werden und der Ladestrom konnte dann begrenzt beziehungsweise der Ladevorgang beendet werden. Beispielsweise wurden Nickel-Cadmium-Zellen oder Nickel-Metallhydrid-Zellen bei den Akkupacks verwendet.

Zur Weiterentwicklung dieses ursprünglichen Standes der Technik wurden eingangs beschriebene digitale Akkupacks mit einem über eine Schnittstellenschaltung ansprechbaren Rechenmittel geschaffen, wobei auch hier der dritte Steueranschluss des Akkupacks verwendet wurde. Auf diese Weise war eine bidirektionale Kommunikation zwischen dem Ladegerät und dem Akkupack möglich geworden, und es bestand bereits die Möglichkeit, Parameter des Akkupacks an ein mit entsprechender Intelligenz ausgestattetes Ladegerät zu übermitteln, zu dem Zweck, dass der Ladevorgang exakt auf den spezifischen Akkutyp und dessen Betriebsparameter abgestimmt werden konnte. - Wenn vorstehend von einem Rechenmittel die Rede ist, so wird hierunter ein an sich beliebiger Microcontroller oder ein ASIC (Application Specific Integrated Circuit) oder ein anderes, insbesondere programmierbares Rechengerät verstanden, mit dessen Hilfe eine vorzugsweise bidirektionale Kommunikation möglich ist, um Informationen abzufragen und an das Ladegerät zu übertragen. Insbesondere kann das Rechenmittel selbst zum Eingriff in den Ladevorgang, also zu Steuerungszwecken im weitesten Sinn ausgebildet und geeignet sein.

EP 800253 A2 zeigt einen Akkupack nach dem Oberbegriff des Anspruchs 1.

Im professionellen Betrieb von derartigen Akkupacks, der mit erheblicher Belastung aller Komponenten in Folge ununterbrochener Benutzung aber auch in Folge sonstiger Einflüsse, wie mechanische oder temperaturbedingte Belastungen, einhergeht, ist es denkbar, dass die Lebensdauer des Akkupacks, also die maximale Betriebsdauer, erreicht wird oder dass temporär oder endgültig ein Datentransfer, also die Übermittlung von Informationen zum Zwecke der Identifizierung des spezifischen Akkutyps nicht wie vorgesehen möglich ist. Hierfür sind mannigfache Ursachen denkbar, die auch nur zeitweise auftreten können, so wie zum Beispiel ein Computer mehr oder weniger häufig aus nicht erklärbaren Gründen nicht mehr ansprechbar ist, was sich aber nach einem Ausschalten wieder geben kann. Wenn in einer solchen Situation ein "intelligentes" Ladegerät bei Ansprechen des Rechenmittels des Akkupacks keine auswertbare Information erhält, so wäre es beispielsweise denkbar, dass das Ladegerät davon ausgeht, dass ein eingangs erwähnter herkömmlicher analoger Akkupack in den Ladeschacht des Ladegeräts eingesteckt ist, sodass eine dementsprechende Laderoutine ausgeführt werden könnte. Dies hätte jedoch fatale Folgen, wenn es sich tatsächlich um einen digitalen Akkupack handelt, der gerade keinen Übertemperaturschutz in Form eines solchen bei analogen Akkupacks üblichen NTC-Widerstands aufweist. Es käme in solchen Fällen bei hier relevanten raschen Ladevorgängen zwischen insbesondere 15 bis 60 Minuten unter Anwendung von Ladeströmen von 1 bis 5 Amperes mit Sicherheit zur Zerstörung des Akkupacks. Wenn beispielsweise Lithium-Ionen-Akkuzellen verwendet werden, so geht dies mit einer erheblichen Gefahr für den Benutzer aber auch mit Umweltbelastung einher, was prinzipiell auch für Akkupacks mit Nickel-Cadmium-Zellen und Nickel-Metallhydrid-Zellen gilt.

Der vorliegenden Erfindung liegt die Aufgabe zu Grunde, dem vorstehend geschilderten Problem wirksam zu begegnen, das heißt es sollen digitale Akkupacks mit den selben zwei Ladeanschlüssen und dem dritten Steueranschluss geschaffen werden, wie bei herkömmlichen analogen Akkupacks, sodass sie unter Verwendung derselben Ladegeräte aufladbar sind, wobei aber sicher verhindert werden soll, dass ein digitaler Akkupack ohne einfachen Temperatursensor, beispielsweise auf Basis eines NTC-Widerstands, irrtümlich als ein solcher herkömmlicher analoger Akkupack identifiziert wird, was dann zur sicheren Zerstörung des Akkupacks im Zuge des falsch gewählten Ladevorgangs führen würde.

Diese Aufgabe wird durch einen Akkupack der eingangs beschriebenen Art gelöst, der dadurch gekennzeichnet ist, dass in der Schnittstellenschaltung ein nichtlineares Bauteil vorgesehen ist, das bei Ansteuerung der Schnittstellenschaltung durch das Ladegerät eine Unterscheidung von einem analogen, linearen Bauteil (z. B. ein NTC-Bauteil) und damit eine Erkennung des Akkutyps gestattet, wenn das Rechenmittel bei Ansteuerung durch das Ladegerät keine Erkennungsinformation bereitstellt.

Während ein herkömmliches analoges NTC-Bauteil eine lineare Strom-Spannungscharakteristik aufweist wird erfindungsgemäß bei der Schnittstellenschaltung zumindest ein nicht lineares Bauteil vorgesehen, das dann auf einfache Weise identifizierbar ist, indem über eine Routine des Ladegeräts nacheinander zwei Arbeitspunkte einer Strom/Spannungscharakteristik an die Schnittstellenschaltung des Akkupacks angelegt und über eine Erfassungseinrichtung in dem Ladegerät der sich einstellende Wert der Spannung beziehungsweise des Stroms erfasst wird und hieraus abgeleitet wird, ob der Akkupack ein analoges lineares Steuerbauteil, insbesondere einen NTC, aufweist oder nicht. Wenn im Zuge des Ansprechens des Rechenmittels des Akkupacks störungs- oder ausfallbedingt kein Informationsaustausch erfolgt, der zu einer Identifizierung des digitalen Akkupacks durch das Ladegerät führt, kann durch Überprüfen der Schnittstellenschaltung auf das Vorhandensein oder Nichtvorhandensein eines nichtlinearen Bauteils, insbesondere in der vorstehend beschriebenen Weise, erkannt werden, ob es sich um einen herkömmlichen analogen Akku handelt oder nicht. Wenn in Folge dieser Überprüfung ausgeschlossen werden kann, dass es sich um einen analogen Akku handelt, so erweist es sich als vorteilhaft, wenn der Ladevorgang nicht begonnen bzw. nicht fortgesetzt wird, um die vorausgehend beschriebenen Konzsequenzen zu vermeiden.

Nach einer ersten Ausführungsform der Erfindung umfasst das nichtlineare Bauteil eine Diode. In weiterer Ausbildung dieses Gedankens können zur Verstärkung der Nichtlinearität zwei Dioden in Reihen geschaltet sein. So erweist es sich ferner als vorteilhaft, wenn das nichtlineare Bauteil eine Sendediode und einen Transistor umfasst, die einen Optokoppler bilden. Auf diese Weise lässt sich das nichtlineare Bauteil einerseits zur Erkennung des Akkutyps nutzen, wenn eine beabsichtigte Kommunikation mit dem Akkupack nicht zu Stande kommt, und andererseits lässt es sich zugleich zur Kommunikation mit dem Rechenmittel des Akkupacks nutzen. Eine solche Kommunikation über denselben Steueranschluss des Akkupacks wäre aber auch realisierbar, indem in der Schnittstellenschaltung eine Kommunikationsleitung mit dem Rechenmittel vorgesehen wäre, sodass die Kommunikation nicht unmittelbar nur über das nichtlineare Bauteil erfolgen würde. Auch dies wäre denkbar.

Nach einem weiteren Erfindungsgedanken wird vorgeschlagen, die Schnittstellenschaltung so auszubilden, dass sie ein Netzwerk mit wenigstens zwei parallelen Armen umfasst, wobei der eine Arm für das Ansprechen des Rechenmittels durch das Ladegerät und der andere Arm für die Übermittlung von Informationen von dem Rechenmittel zu dem Ladegerät dient.

In Weiterbildung dieses Gedankens erweist es sich als vorteilhaft, wenn ein weiterer parallel liegender Arm einen Überlastschutz bildet und insbesondere eine Zehnerdiode umfasst.

Es erweist sich auch als vorteilhaft, wenn das Rechenmittel des Akkupacks nicht lediglich als informationstragendes von extern ansprechbares und auslesendes Speichermittel fungiert, sondern selbst zur Ausführung von Steuerungsfunktionen ausgebildet ist. Im Zuge dessen erweist es sich als vorteilhaft, wenn innerhalb des Akkupacks ein Temperaturfühler vorgesehen ist und das Rechenmittel mit diesem Temperaturfühler zusammenwirkt, also dessen Signale auswertet, um einen kritischen Zustand des Akkupacks zu erkennen.

Ebenso vorteilhaft erweist es sich, wenn innerhalb des Akkupacks ein Spannungssensor zur Ermittlung der Zellenspannung des Akkupacks vorgesehen ist und das Rechenmittel mit diesem Spannungssensor zusammenwirkt, um gleichermaßen einen kritischen Zustand zu erkennen. Auf diese Weise kann beispielsweise erkannt werden, ob und wann die Akkuzellen hinreichend geladen sind, sodass dies als kritischer Zustand erkannt wird und der tatsächliche Ladevorgang dann gesteuert durch das Rechenmittel unterbrochen werden kann.
Hierfür erweist es sich als vorteilhaft, wenn ein durch das Rechenmittel gesteuertes Schaltmittel vorgesehen ist, mittels dessen der Ladevorgang verzögerungsfrei unterbrechbar ist, indem die Verbindung der Akkuzellen mit einem der Ladeanschlüsse unterbrochen wird. Hierfür können in vorteilhafter Weise geeignete Schaltmittel, bevorzugter Weise ein insbesondere zwei MOSFET s verwendet werden.

Gegenstand der Erfindung ist aber auch ein Ladegerät mit den Merkmalen des Anspruchs 11. Vorteilhafte Ausführungsformen ergeben sich aus den Ansprüchen 12 - 14. Weiter ist Gegenstand der Erfindung ein System bestehend aus einem Akkupack der erfindungsgemäßen Art und einem Ladegerät für den Akkupack mit den Merkmalen des Anspruchs 11.

Danach ist eine Prozessor-betriebene Steuervorrichtung des Ladegeräts derart ausgebildet, dass sie zwei Arbeitspunkte einer Strom/Spannungscharakteristik an die Schnittstellenschaltung des Akkupacks legt und über eine Erfassungseinrichtung den sich einstellenden Wert der Spannung bzw. des Stroms erfasst und hieraus ableitet, ob der Akkupack ein analoges lineares Steuerbauteil (NTC) aufweist oder nicht.

Es wird also erfindungsgemäß vorgeschlagen, dass das Ladegerät an zwei Arbeitspunkten im Strom/Spannungsdiagramm Spannungswerte beziehungsweise Stromwerte erfasst und auf diese Weise prüft, ob ein lineares Steuerbauteil, insbesondere ein NTC, oder ein nichtlineares Bauteil vorgesehen ist. Sollte letzteres der Fall sein, kann mit Sicherheit davon ausgegangen werden, dass der eingesteckte Akkupack kein herkömmlicher analoger Akkupack mit einem herkömmlichen Temperatursensor in Form eines NTCs ist. Es sei an dieser Stelle nochmals erwähnt, dass die entsprechende Prüfroutine prinzipiell lediglich dann benötigt wird, wenn ein Ansprechen des Rechenmittels des Akkupacks über die Schnittstellenschaltung nicht bereits zur zweifelsfreien Identifikation des Akkupacks durch Austausch digitalisierter Information führt. Die Prüfroutine braucht also lediglich dann ausgeführt zu werden, wenn eine solche bidirektionale Kommunikation nicht stattfindet oder nicht zur erwünschten Identifikation des Akkutyps führt.

Es erweist sich auch als vorteilhaft, wenn das Ladegerät des beanspruchten Systems so ausgebildet ist, dass es den Ladevorgang unterbindet oder unterbricht, wenn bei der Erfassung der Spannung beziehungsweise des Stroms eine nichtlineare Charakteristik erkannt wird. Solchenfalls erweist es sich als vorteilhaft, wenn dies über entsprechende Anzeigemittel, insbesondere Displays, als Störvorgang anzeigbar ist, damit ein Benutzer den Akkupack als zumindest in diesem Zustand nicht aufladbar sondern betriebsgestört erkennen und durch einen anderen ersetzen kann. Vorteilhafterweise ist das Anzeigemittel akustisch oder akustisch unterstützt, sodass ein Benutzer, insbesondere im Montagebetrieb sofort auf den Störzustand aufmerksam wird, auch wenn das Ladegerät während des Einsteckens des Akkupacks und im Anschluss hieran nicht unmittelbar in Beobachtung gehalten wird.

Des weiteren wird Schutz beansprucht für ein Verfahren mit zum Betreiben eines Ladegeräts mit einem damit verbundenen Akkupack nach einem oder mehreren der Ansprüche 1-10, wobei dass Verfahren die Merkmale des Anspruchs 15 aufweist.

Weitere Merkmale, Einzelheiten und Vorteile der Erfindung ergeben sich aus den beigefügten Patentansprüchen und aus der zeichnerischen Darstellung und der nachfolgenden Beschreibung einer bevorzugten Ausführungsform des erfindungsgemäßen Akkupacks und des erfindungsgemäßen Ladegeräts.

In der Zeichnung zeigt:
Figur 1 eine schematische Darstellung eines bekannten Akkupacks mit einem Temperaturfühler zur Steuerung des Ladevorgangs;
Figur 2 eine schematische Darstellung eines erfindungsgemäßen Akkupacks mit einer schematisch dargestellten Schnittstellenschaltung und eines erfindungsgemäßen Ladegeräts;
Figur 3 eine Strom/Spannungscharakteristik eines linearen und eines nichtlinearen elektrischen Bauteils;
Figur 4 einen Schaltungsaufbau eines erfindungsgemäßen Akkupacks.

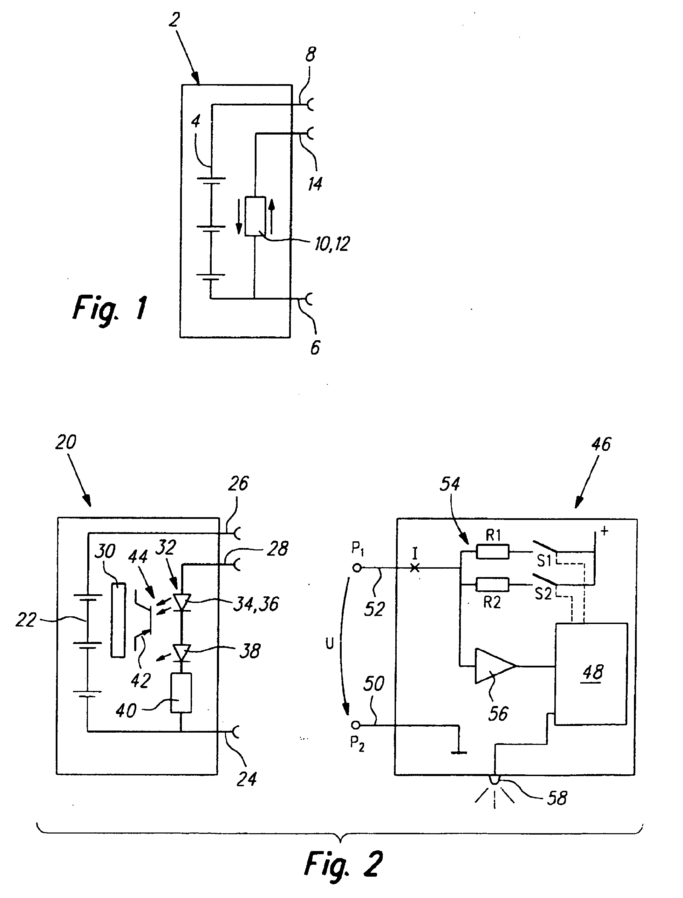

Figur 1 zeigt in schematischer Darstellung einen bekannten herkömmlichen Akkupack 2 mit einer Anzahl von Akkuzellen 4, die über einen ersten und einen zweiten Ladeanschluss 6, 8 durch ein nicht dargestelltes Ladegerät aufladbar sind. Ferner dargestellt ist ein Temperaturfühler 10 in Form eines NTC-Widerstands 12, der zwischen einem (dritten) Steueranschluss 14 und dem ersten Ladeanschluss 6 geschaltet ist. Wenn im Zuge des Ladens des Akkupacks die Temperatur steigt, so kann dies im nicht dargestellten Ladegerät erkannt werden, und es können entsprechende Steuervorgänge ausgelöst werden, um eine Überhitzung des Akkupacks zu verhindern. Dies ist bekannt.

Figur 2 zeigt wiederum stark schematisiert einen erfindungsgemäßen Akkupack 20 mit Akkuzellen 22 und Ladeanschlüssen 24, 26 und einem (dritten) Steueranschluss 28. Ferner verfügt der erfindungsgemäße Akkupack 20 über ein Rechenmittel 30, beispielsweise in Form eines Mikrocontrollers, und über eine Schnittstellenschaltung 32, um das Rechenmittel 30 von extern ansprechen zu können. Die Schnittstellenschaltung 32 verwendet den Steueranschluss 28 und den ersten Ladeanschluss 24. Die in Figur 2 schematisch dargestellte Schnittstellenschaltung 32 umfasst ein nicht lineares Bauteil 34 in Form einer Sendediode 36. Außerdem ist eine weitere Diode 38 in Reihe zu der Sendediode 36 geschaltet, um die Nichtlinearität der Sendediode 36 zu verstärken. Ein Widerstand 40 dient der Strombegrenzung.

Die Sendediode 36 wirkt mit einem schematisch dargestellten Transistor 42 zusammen und bildet mit diesem einen Optokoppler 44. Der Optokoppler 44 dient dazu, das Rechenmittel 30 anzusprechen, was nachfolgend noch erörtert werden wird.

Die Funktion der Schnittstellenschaltung 32 ist einerseits, eine auf noch zu beschreibende Weise zu bewirkende bidirektionale Kommunikation mit dem Rechenmittel 30 zu ermöglichen und andererseits eine Identifizierung des Akkutyps durch das Ladegerät zu ermöglichen, sofern die bidirektionale Kommunikation mit dem Rechenmittel, also die Identifizierung des Akkutyps durch Auslesen der in dem Rechenmittel gespeicherten Informationen, nicht möglich ist. Für diesen Zweck ist in Figur 2 rechts ein Teil eines für diesen Zweck schematisch skizzierten Ladegeräts 46 dargestellt. Das Ladegerät 46 verfügt über eine prozessorbetriebene Steuervorrichtung 48. Zur Verbindung mit dem Akkupack verfügt das Ladegerät 46 über einen ersten Ladeanschluss 50, der mit dem ersten Ladeanschluss 24 des Akkupacks verbindbar ist und einen Steueranschluss 52, der mit dem Steueranschluss 28 des Akkupacks verbindbar ist(ein zweiter Ladeanschluss des Ladegeräts 46, der mit dem zweiten Ladeanschluss 26 des Akkupacks 20 verbindbar ist, ist in Figur 2 nicht dargestellt).

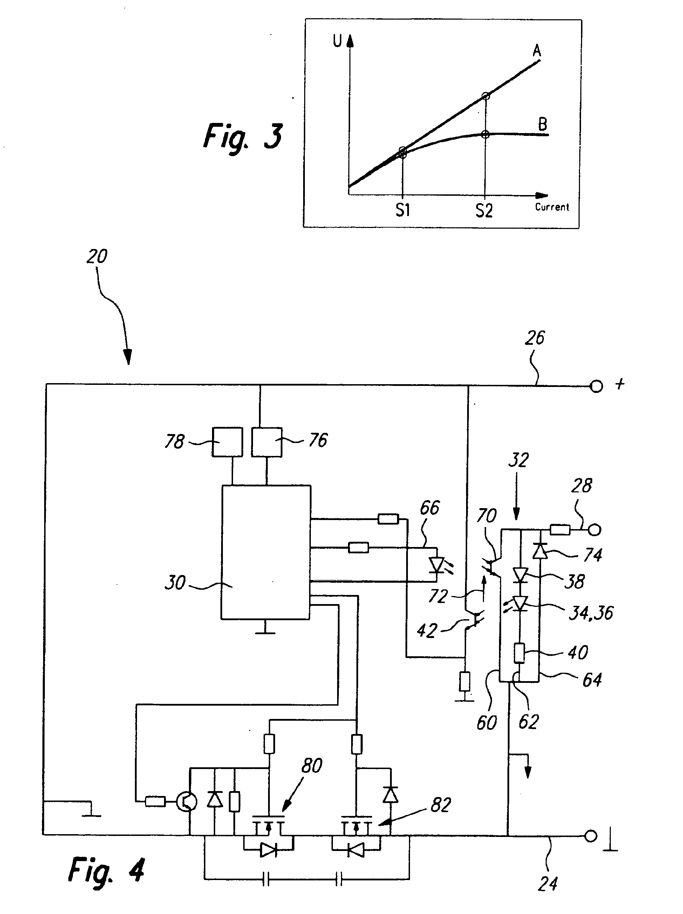

Über eine Schaltungsanordnung 54 kann über einen ersten Schalter S1 und einen ersten Widerstand R1 ein erster Arbeitspunkt einer Strom/Spannungscharakteristik an die Schnittstellenschaltung 32 gelegt werden. Alternativ kann über einen zweiten Schalter S2 und einen zweiten Widerstand R2 ein zweiter Arbeitspunkt der Strom/Spannungscharakteristik an die Schnittstellenschaltung 32 gelegt werden. Dies ist in Figur 3 schematisch dargestellt. Der sich jeweils ergebende Wert der Spannung beziehungsweise des Stroms wird über eine entsprechende Erfassungseinrichtung 56 in dem Ladegerät 46 ermittelt und in der Steuervorrichtung 48 ausgewertet. Bei dieser Auswertung wird geprüft und erkannt, ob eine lineare oder eine nicht lineare Strom/Spannungscharakteristik in der Schnittstellenschaltung 32 gegeben ist. Wenn also nach Verbinden der Anschlüsse des Akkupacks 20 und des Ladegeräts 46 auf entsprechende Anforderung der prozessorbetriebenen Steuervorrichtung 48 des Ladegeräts 46 keine Informationen von dem Akkupack über die Schnittstellenschaltung 32 erhalten werden, werden - wie vorstehend beschrieben - durch aufeinanderfolgendes Schließen der Schalter S1 und S2 die beiden Arbeitspunkte an die Schnittstellenschaltung gelegt, und es werden die entsprechenden Werte der Spannung beziehungsweise des Stroms (je nachdem ob durch die Steuerschaltung 54 ein Konstantstrom oder eine Konstantspannung angelegt wird) daraufhin geprüft, ob eine lineare oder eine nichtlineare Strom/Spannungscharakteristik vorliegt. Wenn eine lineare Charakteristik festgestellt wird, so kann angenommen werden, dass es sich bei dem eingesteckten Akkupack um einen solchen mit einem Temperaturfühler 10 in Form eines NTC-Widerstands handelt, und es kann dementsprechend ein für diesen Akkupack geeigneter Ladevorgang, das heißt eine geeignete Ladeprozedur mit hohen Strömen eingeleitet werden, bis sich der Widerstand des NTC in der üblichen Weise ändert. Wird hingegen festgestellt, dass eine nichtlineare Spannungscharakteristik vorliegt, so kann mit Sicherheit darauf geschlossen werden, dass es sich bei dem eingesteckten Akku nicht um einen herkömmlichen Akku mit einem NTC-Widerstand als Temperaturfühler handelt. Solchenfalls wird der Ladevorgang unterbunden beziehungsweise abgebrochen, und es wird eine Fehlermeldung über geeignete Anzeigemittel 58 ausgegeben; hierbei kann es sich beispielsweise um visuelle Anzeigemittel, etwa Leuchtdioden, oder um akustische oder akustisch unterstütze Anzeigemittel handeln.

Auf diese Weise wird mit Sicherheit gewährleistet, dass ein temporär nicht funktionierender digitaler Akkupack, der keinen herkömmlichen Temperaturfühler in Form eines NTC-Widerstands aufweist, irrtümlich für einen solchen Akkupack gehalten wird und mit einer für den Akkupack nicht geeigneten Ladeprozedur geladen wird, welche zur sicheren Zerstörung und den hiermit zusammenhängenden Gefahren für den Benutzer und die Umwelt führen würde.

Figur 4 zeigt eine etwas detailliertere aber dennoch schematische Darstellung der Schaltungsanordnung des erfindungsgemäßen Akkupacks 20. Insbesondere die Schnittstellenschaltung 32 ist detaillierter dargestellt. Sie umfasst ein Netzwerk von drei parallelen Armen 60, 62 und 64. Der mittlere Arm 62 umfasst das nicht lineare Bauteil 34 in Form der Sendediode 36, die weitere Diode 38 und den Widerstand 40. Wie bereits erwähnt dient die Sendediode 36 im Zusammenwirken mit dem Transistor 42 und der hierdurch gebildete Optokoppler 44 dazu, das Rechenmittel 30 (Mikrocontroller) des Akkupacks 20 anzusprechen, um darin gespeicherte Informationen, insbesondere über die Art des Akkutyps anzufordern. (Informationsanfrage). Die Informationsübermittlung vom Rechenmittel 30 zum Ladegerät erfolgt über einen von dem Rechenmittel 30 ausgehenden Schaltungsteil 66, in dem eine Sendediode 68 angeordnet ist, und einen mit dieser zusammenwirkenden Transistor 70 in dem in Figur 4 links dargestellten Arm 60 der Schnittstellenschaltung 32. Sendediode 68 und Transistor 70 bilden einen weiteren Optokoppler 72 zur Informationsvermittlung ausgehend von dem Rechenmittel 30 über die Schnittstellenschaltung 32 hin zum Ladegerät 46 beziehungsweise zu dessen Steuervorrichtung 48.

In dem in Figur 4 rechts dargestellten Arm 64 der Schnittstellenschaltung 32 ist eine Zehnerdiode 74 als Schutzbeschaltung vorgesehen.

Das Rechenmittel 30 des Akkupacks 20 dient aber nicht lediglich zum Auslesen von Informationen auf Anforderung, sondern es ist auch zur Steuerung des Ladevorgangs ausgebildet. Es wirkt mit einem Spannungssensor 76 zur Ermittlung der Zellenspannung des Akkupacks zusammen, um einen kritischen Zustand der Akkuzellen 22 zu erkennen. Außerdem wirkt es mit einem Temperatursensor 78 zusammen um ebenfalls einen kritischen Zustand der Akkuzellen 22 beziehungsweise Akkupacks zu erkennen. Werden kritische Zustände erkannt, so greift das Rechenmittel 30 als Steuerungsvorrichtung für den Ladevorgang in den Ladevorgang ein und unterbricht beispielsweise über geeignete Schaltmittel 80, 82, bei denen es sich um MOSFETs handeln kann, den Ladevorgang. Das Ansprechen des Rechenmittels 30 über die Schnittstellenschaltung 32 ist auch bei geöffneten Schaltmitteln 80,82 möglich.

Insgesamt kann durch den erfindungsgemäßen Akkupack und die erfindungsgemäße Ausbildung des Ladegeräts sicher verhindert werden, dass ein Akkupack irrtümlich für einen herkömmlichen analogen Akkupack mit Temperaturfühler (NTC-Element)gehalten und im Zuge des Ladevorgangs zerstört wird.

## Patentansprüche

1. Akkupack (20), insbesondere für die Verwendung bei Elektrohandwerkzeuggeräten, mit einem ersten und einem zweiten Ladeanschluss (24, 26) und mit einem dritten Steueranschluss (28), die alle drei zur Herstellung einer Ladeverbindung an ein Ladegerät (46) anschließbar sind, und mit einem über eine Schnittstellenschaltung (32) ansprechbaren Rechenmittel (30), wobei die Schnittstellenschaltung den dritten Steueranschluss (28) verwendet, **dadurch gekennzeichnet, dass** in der Schnittstellenschaltung (32) ein nichtlineares Bauteil (34) vorgesehen ist, das bei Ansteuerung der Schnittstellenschaltung (32) durch das Ladegerät (46) eine Unterscheidung von einem analogen, linearen Bauteil und damit eine Erkennung des Akkutyps gestattet, wenn das Rechenmittel (30) bei Ansteuerung durch das Ladegerät (46) keine Erkennungsinformation bereitstellt.

2. Akkupack nach Anspruch 1, **dadurch gekennzeichnet, dass** das nichtlineare Bauteil (34) eine Diode (36) umfasst.

3. Akkupack nach Anspruch 2, **dadurch gekennzeichnet, dass** das nichtlineare Bauteil (34) eine Sendediode umfasst, die zusammen mit einen Transistor (42) einen Optokoppler (44) bilden.

4. Akkupack nach Anspruch 1, 2 oder 3, **dadurch gekennzeichnet, dass** zur Verstärkung der Nichtlinearität zwei Dioden (34, 36) in Reihe geschaltet sind.

5. Akkupack nach einem oder mehreren der vorstehenden Ansprüche, **dadurch gekennzeichnet, dass** die Schnittstellenschaltung (32) ein Netzwerk mit wenigstens zwei parallelen Armen (60, 62, 64) umfasst, wobei der eine Arm (64) für das Ansprechen des Rechenmittels (30) durch das Ladegerät (46) und der andere Arm (60) für die Übermittlung von Information von dem Rechenmittel (30) zu dem Ladegerät (46) dient.

6. Akkupack nach Anspruch 5, **dadurch gekennzeichnet, dass** ein weiterer Arm (64) einen Überlastschutz bildet und insbesondere eine Zehnerdiode (74) umfasst.

7. Akkupack nach einem oder mehreren der vorstehenden Ansprüche, **dadurch gekennzeichnet, dass** ein Temperaturfühler (78) vorgesehen ist und das Rechenmittel (30) mit dem Temperaturfühler (78) zusammenwirkt, um einen kritischen Zustand zu erkennen.

8. Akkupack nach einem oder mehreren der vorstehenden Ansprüche, **dadurch gekennzeichnet, dass** ein Spannungssensor (76) zur Ermittlung der Zellenspannung des Akkupacks vorgesehen ist und dass das Rechenmittel (30) mit dem Spannungssensor (76) zusammenwirkt, um einen kritischen Zustand zu erkennen.

9. Akkupack nach einem oder mehreren der vorstehenden Ansprüche, **dadurch gekennzeichnet, dass** ein durch das Rechenmittel (30) gesteuertes Schaltmittel (80, 82) vorgesehen ist, mittels dessen der Ladevorgang unterbrechbar ist, indem die Verbindung der Akkuzellen (22) mit einem der Ladeanschlüsse (24, 26) unterbrochen wird.

10. Akkupack nach Anspruch 9, **dadurch gekennzeichnet, dass** das Schaltmittel (80, 82) einen MOSFET umfasst.

11. Ladegerät (46) mit einer prozessorbetriebenen Steuervorrichtung (48) für einen Akkupack (20, 2), nach einem oder mehreren der Ansprüche 1-10, **dadurch gekennzeichnet, dass** die Steuervorrichtung (48) derart ausgebildet ist, dass sie zwei Arbeitspunkte einer Strom/Spannungscharakteristik an die Schnittstellenschaltung (32) des Akkupacks (20, 2) legt und über eine Erfassungseinrichtung (56) den sich einstellenden Wert der Spannung bzw. des Stroms erfasst und hieraus ableitet, ob der Akkupack (20, 2) ein analoges lineares Steuerbauteil (z. B. NTC) (10, 12) aufweist oder nicht.

12. Ladegerät nach Anspruch 11, **dadurch gekennzeichnet, dass** das Ladegerät (46) so ausgebildet ist, dass es den Ladevorgang unterbindet oder unterbricht, wenn bei der Erfassung der Spannung bzw. des Stroms eine nichtlineare Charakteristik erkannt wird.

13. Ladegerät nach Anspruch 12, **dadurch gekennzeichnet, dass** die Unterbindung oder Unterbrechung des Ladevorgangs als Störzustand über ein Anzeigemittel (58) des Ladegeräts anzeigbar ist.

14. Ladegerät nach Anspruch 13, **dadurch gekennzeichnet, dass** das Anzeigemittel (58) akustisch oder optisch unterstützt ist.

15. System aus einem Akkupack (20) nach einem oder mehreren der Ansprüche 1 - 10 und einem Ladegerät (46) für den Akkupack nach einem der Ansprüche 11 - 14.

16. Verfahren zum Betreiben eines Ladegeräts (46) mit einem damit verbundenen Akkupack (20, 2) nach einem oder mehreren der Ansprüche 1-10, **dadurch gekennzeichnet, dass** zeitlich nacheinander zwei Arbeitspunkte einer Strom/Spannungscharakteristik an die Schnittstellenschaltung (32) des Akkupacks (20, 2) gelegt werden und über eine Erfassungseinrichtung (56) der sich einstellende Wert der Spannung bzw. des Stroms erfasst wird und hieraus abgeleitet wird, ob der Akkupack ein analoges lineares Steuerbauteil (z. B. NTC) (10, 12) aufweist oder nicht.

17. Verfahren nach Anspruch 16, dass eine Fehlermeldung ausgegeben wird und der Ladevorgang nicht fortgesetzt wird.

## Claims

1. Rechargeable battery pack (20), in particular for use in electrical hand tool devices, having a first and a second charging connection (24, 26) and having a third control connection (28), all three being connectable to a charging device (46) for producing a charging connection, and having a calculating means (30) addressable via an interface circuit (32), the interface circuit using the third control connection (28), **characterised in that** a non-linear component (34) is provided in the interface circuit (32), which component, upon activation of the interface circuit (32) by the charging device (46), allows a differentiation from an analog, linear component and thus identification of the rechargeable battery type, should the calculating means (30) fail to provide identification information upon activation by the charging device (46).

2. Rechargeable battery pack according to Claim 1, **characterised in that** the non-linear component (34) comprises a diode (36).

3. Rechargeable battery pack according to Claim 2, **characterised in that** the non-linear component (34) comprises a transmitting diode forming, together with a transistor (42), an optocoupler (44).

4. Rechargeable battery pack according to Claim 1, 2 or 3, **characterised in that** two diodes (34, 36) are connected in series to increase the nonlinearity.

5. Rechargeable battery pack according to one or more of the preceding claims, **characterised in that** the interface circuit (32) comprises a network with at least two parallel arms (60, 62, 64), one arm (64) serving for the addressing of the calculating means (30) by the charging device (46) and the other arm (60) serving to transmit information from the calculating means (30) to the charging device (46).

6. Rechargeable battery pack according to Claim 5, **characterised in that** a further arm (64) forms an overload protection and in particular comprises a Zener diode (74).

7. Rechargeable battery pack according to one or more of the preceding claims, **characterised in that** a temperature sensor (78) is provided and the calculating means (30) cooperates with the temperature sensor (78) to detect a critical state.

8. Rechargeable battery pack according to one or more of the preceding claims, **characterised in that** a voltage sensor (76) for determining the cell voltage of the rechargeable battery pack is provided and **in that** the calculating means (30) cooperates with the voltage sensor (76) to detect a critical state.

9. Rechargeable battery pack according to one or more of the preceding claims, **characterised in that** a switching means (80, 82) controlled by the calculating means (30) is provided, by means of which the charging process can be interrupted by interrupting the connection of the rechargeable battery cells (22) to one of the charging connections (24, 26).

10. Rechargeable battery pack according to Claim 9, **characterised in that** the switching means (80, 82) comprises a MOSFET.

11. Charging device (46) having a processor-operated control device (48) for a rechargeable battery pack (20, 2), **characterised in that** the control device (48) is configured in such a manner that it applies two working points of a current/voltage characteristic to the interface circuit (32) of the rechargeable battery pack (20, 2) and detects the established value of voltage or current via a detecting device (56) and from this deduces whether or not the rechargeable battery pack (20, 2) has an analog linear control component (e.g. NTC) (10, 12).

12. Charging device according to Claim 11, **characterised in that** the charging device (46) is configured such that it prevents or interrupts the charging process when a non-linear characteristic is detected on detection of the voltage or current.

13. Charging device according to Claim 12, **characterised in that** the prevention or interruption of the charging process can be indicated as a disturbed state via an indicating means (58) of the charging device.

14. Charging device according to Claim 13, **characterised in that** the indicating means (58) is acoustically or visually assisted.

15. System comprising a rechargeable battery pack (20) according to one or more of Claims 1-10 and a charging device (46) for the rechargeable battery pack according to one of Claims 11 -14.

16. Method for operating a charging device (46) having a rechargeable battery pack (20, 2) associated therewith according to one or more of Claims 1-10, **characterised in that** two working points of a current/voltage characteristic are applied consecutively to the interface circuit (32) of the rechargeable battery pack (20, 2) and the established value of the voltage or current is detected via a detecting device (56) and from this it is deduced whether or not the rechargeable battery pack has an analog linear control component (e.g. NTC) (10, 12).

17. Method according to Claim 16, in that an error message is issued and the charging process is not continued.

## Revendications

1. Ensemble d'accumulateur (20), en particulier pour une utilisation dans des appareils électroportatifs, comportant une première et une seconde bornes de raccordement pour la charge (24, 26) et une troisième borne de commande (28), qui peuvent toutes les trois être raccordées à un chargeur (46) pour établir une connexion de charge, et un dispositif de calcul (30) pouvant être sollicité par une commande séquentielle (32), dans lequel la commande séquentielle utilise la troisième borne de commande (28), **caractérisé en ce que** la commande séquentielle (32) comporte un composant non linéaire (34), qui, au moment de l'enclenchement de la commande séquentielle (32), autorise l'appareil de charge (46) à effectuer une différentiation par un composant analogique, linéaire, pour reconnaître le type d'accumulateur, lorsque le dispositif de calcul (30), ne dispose pas d'informations de reconnaissance lors du démarrage du chargeur (46).

2. Ensemble d'accumulateur selon la revendication 1, **caractérisé en ce que** le composant non linéaire (34) comporte une diode (36).

3. Ensemble d'accumulateur selon la revendication 2, **caractérisé en ce que** le composant non linéaire (34) comporte une diode émettrice qui forme un coupleur optique (44) en combinaison avec un transistor (42).

4. Ensemble d'accumulateur selon la revendication 1, 2 ou 3, **caractérisé en ce que** pour renforcer la non-linéarité, deux diodes (34, 36) sont connectées en série.

5. Ensemble d'accumulateur selon une ou plusieurs des revendications précédentes, **caractérisé en ce que** la commande séquentielle (32) comporte un circuit comprenant au moins deux bras parallèles (60, 62, 64), dans lequel l'un de ces bras (64) sert à solliciter le dispositif de calcul (30) par le chargeur (46) et l'autre de ces bras (60) sert à la transmission d'informations du dispositif de calcul (30) vers le chargeur (46).

6. Ensemble d'accumulateur selon la revendication 5, **caractérisé en ce qu'**un autre bras (64) constitue une protection de surcharge et comporte de préférence une diode Zehner (74).

7. Ensemble d'accumulateur selon une ou plusieurs des revendications précédentes, **caractérisé en ce qu'**un capteur de température (78) est prévu et **en ce que** le dispositif de calcul (30) coopère avec le capteur de température (78) pour reconnaître un état critique.

8. Ensemble d'accumulateur selon une ou plusieurs des revendications précédentes, **caractérisé en ce qu'**un testeur de tension (76) est prévu pour mesurer la tension des cellules de l'accumulateur et **en ce que** le dispositif de calcul (30) coopère avec le testeur de tension (76) pour reconnaître un état critique.

9. Ensemble d'accumulateur selon une ou plusieurs des revendications précédentes, **caractérisé en ce qu'**un moyen de commande (80, 82) piloté par le dispositif de calcul (30) est prévu, au moyen duquel le processus de charge peut être interrompu, du fait de la liaison entre les cellules (22) de l'accumulateur avec une des bornes de raccordement pour la charge (24, 26).

10. Ensemble d'accumulateur selon la revendication 9, **caractérisé en ce que** les moyens de commande (80, 82) comportent un MOSFET.

11. Chargeur (46) comportant une installation de commande (48) comprenant un processeur pour un ensemble d'accumulateur (20, 2), selon une ou plusieurs des revendications précédentes, **caractérisé en ce que** l'installation de commande (48) est agencée de telle manière que deux points de travail d'une caractéristique courant/tension sont déterminés pour la commande séquentielle (32) de l'ensemble d'accumulateur (20, 2) et sont utilisés par une installation d'enregistrement (56) qui définit les valeurs de la tension, respectivement du courant à régler et qui détermine si l'ensemble d'accumulateur (20, 2) comporte ou non un composant analogique non linéaire (par exemple NTC) (10, 12).

12. Chargeur selon la revendication 11, **caractérisé en ce que** le chargeur (46) est agencé de telle manière que le processus de charge est supprimé ou interrompu lorsque, lors de la détermination de la tension, respectivement du courant, une caractéristique non linéaire est reconnue.

13. Chargeur selon la revendication 12, **caractérisé en ce que** la suppression ou l'interruption du processus de charge est reconnu comme un état de perturbation par un moyen indicateur (58) du chargeur.

14. Chargeur selon la revendication 13, **caractérisé en ce que** le moyen indicateur (58) est soutenu optiquement ou acoustiquement.

15. Système composé d'un ensemble d'accumulateur (20) selon une ou plusieurs des revendications 1 - 10 et d'un chargeur (46) selon une des revendications 11 -14.

16. Procédé pour actionner un chargeur (46) couplé à l'ensemble d'accumulateur (20, 2), selon une ou plusieurs des revendication 1 -10, **caractérisé en ce que**, successivement deux points de travail d'une caractéristique courant/tension sont introduits dans la commande séquentielle (32) de l'ensemble d'accumulateur (20, 2) et sont utilisés par une installation de captage (56) qui définit les valeurs de la tension, respectivement du courant à régler et qui détermine si l'ensemble d'accumulateur comporte ou non un composant analogique non linéaire (par exemple NTC) (10, 12).

17. Procédé selon la revendication 16, **caractérisé en ce qu'**une indication d'erreur est émise et que le processus de charge n'est pas poursuivi.
